(19) 

Europäisches
Patentamt
European
Patent Office
Office européen
des brevets

(11) **EP 4 723 525 A1**

(12) **EUROPEAN PATENT APPLICATION**
published in accordance with Art. 153(4) EPC

(43) Date of publication:
08.04.2026 Bulletin 2026/15

(21) Application number: 24838514.8

(22) Date of filing: 13.06.2024

(51) International Patent Classification (IPC):
*H04L 1/1607* (2023.01) *H04W 84/12* (2009.01)

(52) Cooperative Patent Classification (CPC):
H04L 1/1607; H04L 1/20; H04W 84/12

(86) International application number:
PCT/CN2024/098958

(87) International publication number:
WO 2025/011256 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.07.2023 CN 202310852463

(71) Applicant: Huawei Technologies Co., Ltd.
Shenzhen, Guangdong 518129 (CN)

(72) Inventors:
• LI, Wenjun
  Shenzhen, Guangdong 518129 (CN)
• RUAN, Wei
  Shenzhen, Guangdong 518129 (CN)
• MA, Yunsi
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **COMMUNICATION METHOD AND RELATED APPARATUS**

(57) Embodiments of this application provide a communication method and a related apparatus. The communication method includes: receiving a wireless fidelity Wi-Fi data frame from a transmitter; and sending a block acknowledgment frame to the transmitter, where the block acknowledgment frame includes interference information of the Wi-Fi data frame. In embodiments of this application, the transmitter takes the interference information fed back by a receiver into consideration, thereby improving accuracy of a packet error rate.

```
┌──────────┐              ┌────────────┐
│ Receiver │              │ Transmitter│
└──────────┘              └────────────┘
     │                         │
     │◄─── S401: Wi-Fi data frame
     │                         │
     │ S402: Block acknowledgment
     │           frame ──────►│
     │                         │
     │         ┌───────────────────────────────────────────┐
     │         │ S403: Determine a packet error ratio of   │
     │         │ the Wi-Fi data frame based on a quantity   │
     │         │ of AMPDUs, a quantity of erroneous         │
     │         │ MPDUs, and interference information of     │
     │         │ the Wi-Fi data frame                        │
     │         └───────────────────────────────────────────┘
     │                         │
```

FIG. 4

EP 4 723 525 A1

**Description**

This application claims priority to Chinese Patent Application No. 202310852463.X, filed with the China National Intellectual Property Administration on July 11, 2023 and entitled "COMMUNICATION METHOD AND RELATED APPARATUS", which is incorporated herein by reference in its entirety.

**TECHNICAL FIELD**

This application relates to the field of communication technologies, and in particular, to a communication method and a related apparatus.

**BACKGROUND**

When a wireless fidelity (wireless fidelity, Wi-Fi) device is used for communication, a transmitter usually selects a transmit parameter based on a packet error rate (packet error ratio, PER), for example, selects a modulation and coding scheme (modulation and coding scheme, MCS). The PER mainly depends on a signal to interference and noise ratio (signal to interference and noise ratio, SINR) of a signal received by a receiver. For example, with a same transmit parameter, a larger SINR indicates a lower PER. The SINR is affected by interference signal strength and noise intensity.
Currently, decoding errors caused by impact of the interference signal strength and impact of the noise intensity usually occur simultaneously, making it impossible for the transmitter to sense interference impact on the receiver. This results in conservative selection of a transmit parameter, such as a low MCS, leading to a low air interface transmission rate.

**SUMMARY**

Embodiments of this application disclose a communication method and a related apparatus. A receiver feeds back interference information to a transmitter, so that the transmitter takes impact of an interference signal into consideration, thereby improving accuracy of collecting statistics on a packet error rate by the transmitter.
According to a first aspect, an embodiment of this application discloses a first communication method. The method is applied to a receiver. The receiver in this embodiment of this application may be an access point (access point, AP), or may be a station (station, STA). When the receiver is an AP, a transmitter may be a STA or an AP. When the receiver is a STA, a transmitter may be an AP or a STA. A function performed by the AP in this application may be performed by an apparatus (for example, a chip, a chip system, a circuit, or a means) in the AP, and a function performed by the STA in this application may be performed by an apparatus (for example, a chip, a chip system, a circuit, or a means) in the STA.
The method includes: receiving a Wi-Fi data frame from a transmitter; and sending a block acknowledgment frame (block acknowledgment frame, BA frame) to the transmitter. The BA frame includes interference information of the Wi-Fi data frame. In other words, when the receiver is interfered and transmission of some subframes fails due to a collision, the interference information is fed back to the transmitter. In this way, the transmitter may take impact of an interference signal into consideration, thereby improving accuracy of collecting statistics on a packet error rate by the transmitter.
In some feasible examples, the Wi-Fi data frame includes a physical protocol data unit (physical protocol data unit, PPDU), data to be transmitted in the PPDU is encoded into N orthogonal frequency division multiplexing (orthogonal frequency division multiplexing, OFDM) symbols, the interference information of the Wi-Fi data frame is a proportion of interfered OFDM symbols in the PPDU, and N is a positive integer.
The method further includes: recording an error vector magnitude (error vector magnitude, EVM) of each of the N OFDM symbols through a physical (physical, PHY) layer, to obtain N EVMs, where the N EVMs include a first EVM, and an absolute value of the first EVM is a maximum value of absolute values of the N EVMs; determining a difference between the absolute value of the first EVM and the absolute value of each of the N EVMs through the PHY layer; determining a first quantity of differences greater than a first threshold through the PHY layer; and using a ratio of the first quantity to N as the proportion of the interfered OFDM symbols in the PPDU through the PHY layer.
In some feasible examples, the Wi-Fi data frame includes an aggregated medium access control protocol data unit (aggregated MAC protocol data unit, AMPDU), the AMPDU includes M MAC protocol data units (MAC protocol data units, MPDUs), the interference information of the Wi-Fi data frame is a quantity of interfered MPDUs in the AMPDU, and M is a positive integer.
The method further includes: checking each of the M MPDUs through a medium access control (medium access control, MAC) layer, to obtain a first MPDU with a check error; determining, through the MAC layer, a second quantity of first MPDUs corresponding to an interfered OFDM symbol, where a difference between an absolute value of an EVM of the interfered OFDM symbol and an absolute value of a first EVM is less than a first threshold, the first EVM is a maximum value of absolute values of N EVMs, and the N EVMs include an EVM of each of N OFDM symbols obtained from PPDU encoding; and using the second quantity as the quantity of interfered MPDUs in the AMPDU through the MAC layer.

In some feasible examples, M is less than or equal to 256.

In some feasible examples, the interference information of the Wi-Fi data frame is located in a reserved field or a user-defined field of the block acknowledgment frame.

According to a second aspect, an embodiment of this application discloses a second communication method. The method is applied to a transmitter. The communication method includes: sending a Wi-Fi data frame to a receiver; receiving a block acknowledgment frame from the receiver, where the block acknowledgment frame includes interference information of the Wi-Fi data frame; and determining a packet error rate of the Wi-Fi data frame based on a quantity of AMPDUs, a quantity of erroneous MPDUs, and the interference information of the Wi-Fi data frame. In this way, the receiver feeds back, to the transmitter, the interference information of the received Wi-Fi data frame, so that the transmitter takes impact of an interference signal into consideration, thereby improving accuracy of collecting statistics on the packet error rate by the transmitter.

In some feasible examples, the Wi-Fi data frame includes a PPDU, data to be transmitted in the PPDU is encoded into N OFDM symbols, the interference information of the Wi-Fi data frame is a proportion of interfered OFDM symbols in the PPDU, N is a positive integer, and the packet error rate *PER* of the Wi-Fi data frame is obtained through calculation according to the following formula:

$$PER = max\left\{\frac{error\_mpdu\_num}{aggr\_mpdu\_num} \times 100\% - ppdu\_interf\_ratio, 0\right\}$$

where *error_mpdu_num* is the quantity of erroneous MPDUs, *aggr_mpdu_num* is the quantity of AMPDUs, and *ppdu_interf_ratio* is the proportion of the interfered OFDM symbols in the PPDU.

In some feasible examples, the Wi-Fi data frame includes an AMPDU, the AMPDU includes M MPDUs, the interference information of the Wi-Fi data frame is a quantity of interfered MPDUs in the AMPDU, M is a positive integer, and the packet error rate *PER* of the Wi-Fi data frame is obtained through calculation according to the following formula:

$$PER = \frac{error\_mpdu\_num - interf\_mpdu\_num}{aggr\_mpdu\_num} \times 100\%$$

where *error_mpdu_num* is the quantity of erroneous MPDUs, *aggr_mpdu_num* is the quantity of AMPDUs, and *interf_mpdu_num* is the quantity of interfered MPDUs in the AMPDU.

According to a third aspect, an embodiment of this application discloses a communication apparatus. The apparatus is used in a receiver. In this embodiment of this application, a function performed by the receiver may be performed by an apparatus in the receiver. The apparatus has a function corresponding to the method according to any one of the first aspect or any feasible example in the first aspect. The function may be implemented by hardware, or may be implemented by hardware executing corresponding software. The hardware or the software includes one or more units corresponding to the foregoing function.

According to a fourth aspect, an embodiment of this application discloses a communication apparatus. The apparatus is used in a transmitter. In this embodiment of this application, a function performed by the transmitter may be performed by an apparatus in the transmitter. The apparatus has a function corresponding to the method according to any one of the second aspect or any feasible example in the second aspect. The function may be implemented by hardware, or may be implemented by hardware executing corresponding software. The hardware or the software includes one or more units corresponding to the foregoing function.

According to a fifth aspect, an embodiment of this application discloses a communication apparatus. The apparatus may be a transmitter or a receiver. The apparatus may include a processor. The processor is configured to enable, by executing instructions in a memory or through a logic circuit, the communication apparatus to perform the method in any one of the first aspect and the second aspect or the feasible examples.

In some feasible examples, the communication apparatus further includes one or more of a memory and a transceiver. The transceiver is configured to send and receive data and/or signaling.

According to a sixth aspect, an embodiment of this application provides a computer-readable storage medium. The computer-readable storage medium stores instructions. When the instructions are run by a processor, the method in any one of the first aspect and the second aspect or the feasible examples is performed.

According to a seventh aspect, an embodiment of this application provides a computer program product. The computer program product includes instructions. When the instructions are run by a processor, the method in any one of the first aspect and the second aspect or the feasible examples is performed.

According to an eighth aspect, this application provides a chip, including a processor, configured to: invoke, from a memory, instructions stored in the memory, and run the instructions, so that a communication apparatus in which the chip is installed performs the method in any one of the first aspect and the second aspect or the feasible examples.

According to a ninth aspect, this application provides another chip, including an input interface, an output interface, and a processing circuit. The input interface, the output interface, and the circuit are connected through an internal connection path. The processing circuit is configured to perform the method in any one of the first aspect and the second aspect or the feasible examples. Optionally, the chip further includes a memory. The input interface, the output interface, a processor, and the memory are connected through an internal connection path. The processor is configured to execute code in the memory. When the code is executed, the processor is configured to perform the method in any one of the first aspect and the second aspect or the feasible examples.

According to a tenth aspect, this application provides a chip system, including at least one processor and a communication interface. The communication interface and the at least one processor are interconnected through a line. The at least one processor is configured to run a computer program or instructions, to perform the method in any one of the first aspect and the second aspect or the feasible examples.

It should be understood that mutual reference may be made to the implementations and beneficial effects of the foregoing aspects.

**BRIEF DESCRIPTION OF DRAWINGS**

The following describes accompanying drawings used in embodiments of this application.

FIG. 1 is a diagram of an architecture of a communication system according to an embodiment of this application;
FIG. 2 is a diagram of structures of an AP and a STA;
FIG. 3 is a diagram of a structure of an AMPDU;
FIG. 4 is a diagram of interaction in a communication method according to an embodiment of this application;
FIG. 5 is a diagram of determining a proportion of interfered OFDM symbols in a PPDU according to an embodiment of this application;
FIG. 6 is a diagram of determining a quantity of interfered MPDUs in an AMPDU according to an embodiment of this application;
FIG. 7 is a diagram of a structure of a BA frame;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of a STA according to an embodiment of this application.

**DESCRIPTION OF EMBODIMENTS**

Embodiments of this application may be applicable to a sensing (sensing) system, applicable to a system that complies with an institute of electrical and electronics engineers (institute of electrical and electronics engineers, IEEE) 802.11 system standard, for example, 802.11bf, 802.11a/b/g, 802.11n, 802.11ac, 802.11ax, or a next generation thereof, for example, 802.11be, Wi-Fi 7, or EHT, or a further next generation standard, for example, a wireless local area network system that complies with an 802.11 series protocol, for example, Wi-Fi 8, UHR, or Wi-Fi AI, or a wireless personal area network system based on ultra-wideband UWB, or applicable to a wireless local area network (wireless local area network, WLAN) scenario. Alternatively, embodiments of this application may be applicable to a wireless local area network system, for example, an internet of things (internet of things, IoT) network or a vehicle-to-everything (vehicle-to-everything, V2X) network. Certainly, embodiments of this application may be further applicable to another possible communication system, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a communication system evolved after a 5G communication system (for example, a 6G communication system), or a non- (3rd generation partnership project, 3GPP) communication system. This is not limited herein.

The following describes embodiments of this application with reference to the accompanying drawings in embodiments of this application.

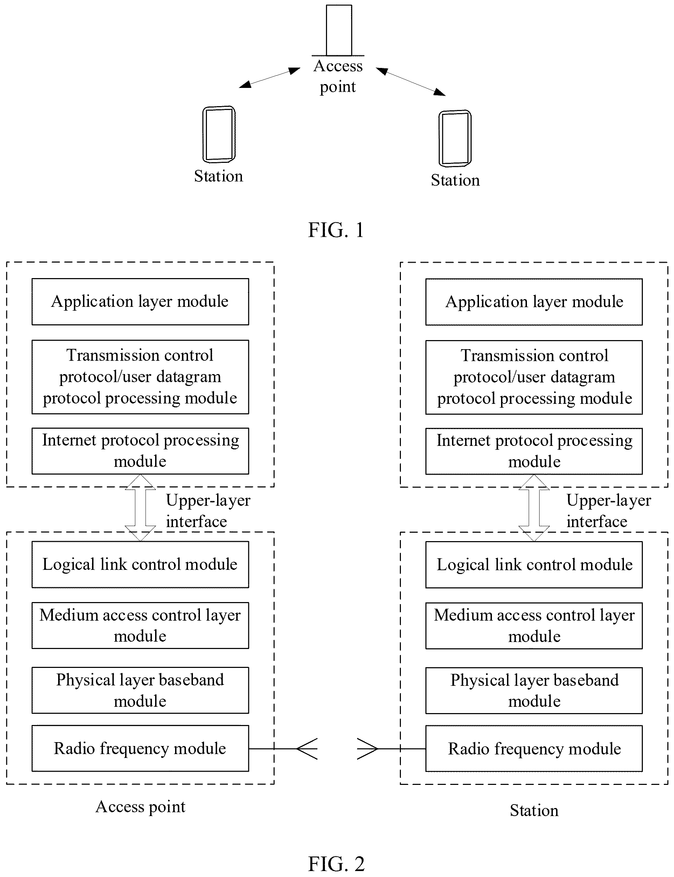

FIG. 1 is a diagram of a structure of a communication system according to an embodiment of this application. The communication system in FIG. 1 takes a WLAN as an embodiment. As shown in FIG. 1, an example in which the communication system includes one access point (access point, AP) and two stations (stations, STAs) is used for description. A STA associated with the AP can receive a radio frame sent by the AP, and can also send a radio frame to the AP. In addition, embodiments of this application are also applicable to communication between APs, or are applicable to communication between STAs. It should be understood that quantities of APs and STAs in FIG. 1 are merely examples, and embodiments of this application are not limited thereto. For example, more or fewer STAs that communicate with the AP may be further included. For another example, more or fewer APs that communicate with the STA may be further included. For conciseness of description, this is not described one by one in the accompanying drawings.

The STA in embodiments of this application is an apparatus having a wireless communication function, supports communication based on a WLAN protocol, and has a capability of communicating with another station or access point in the WLAN network. In a WLAN system, the station may be referred to as a non-access point station (non-access point station, non-AP STA). For example, the STA is any user communication device that allows a user to communicate with the AP and further communicate with the WLAN. The STA may be an entire device, or may be a chip or a processing system installed in the entire device. The device in which the chip or the processing system is installed may implement the method and the function in embodiments of this application under control of the chip or the processing system. For example, the STA may be various devices having a wireless communication function, for example, a handheld device, a vehicle-mounted device, a wearable device, a computing device, another processing device connected to a wireless modem, user equipment (user equipment, UE) in various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium. For example, the STA may be a router, a switch, a bridge, or the like. Herein, for ease of description, the devices mentioned above are collectively referred to as stations or STAs.

The AP in embodiments of this application is an apparatus having a wireless communication function, supports communication based on a WLAN protocol, has a function of communicating with another device (for example, a station or another access point) in a WLAN network, and certainly, may further have a function of communicating with another device. In the WLAN system, the access point may be referred to as an access point station (AP STA). The AP may be an entire device, or may be a chip or a processing system installed in the entire device. The device in which the chip or the processing system is installed may implement the method and the function in embodiments of this application under control of the chip or the processing system. The AP in embodiments of this application may be an apparatus that provides a service for a STA. For example, the AP may be a communication entity like a communication server, a router, a switch, or a bridge. The AP may include base stations in various forms like a macro base station, a micro base station, and a relay station. Certainly, the AP may alternatively be a chip and a processing system in these devices in various forms, to implement the method and the function in embodiments of this application.

The WLAN system can provide high-speed and low-delay transmission, and may be applied to, for example, the internet of things industry, the vehicle-to-everything industry, the banking industry, enterprise offices, exhibition halls of stadiums, concert halls, hotel rooms, dormitories, wards, classrooms, supermarkets, squares, streets, production workshops, and warehousing. Certainly, a device supporting WLAN communication (for example, an access point or a station) may be a sensor node (for example, a smart water meter, a smart electric meter, or a smart air detection node) in a smart city, a smart device (for example, a smart camera, a projector, a display, a television, a sound system, a refrigerator, or a washing machine) in smart home, a node in the internet of things, an entertainment terminal (for example, a wearable device such as an AR device or a VR device), a smart device (for example, a printer, a projector, a loudspeaker, or a sound system) in smart office, a vehicle-to-everything device in vehicle-to-everything, infrastructure (for example, a vending machine, a self-service navigation station in a supermarket, a self-service checkout device, or a self-service ordering machine) in a daily life scenario, a device in a large-scale stadium and a music hall, or the like. Specific forms of the STA and the AP are not specifically limited in embodiments of this application, and are merely examples for description herein.

FIG. 2 is a diagram of structures of an AP and a STA. As shown in FIG. 2, the AP and the STA may include an antenna, a radio frequency (radio) module, a PHY layer baseband module, a MAC layer module, a logical link control (logical link control, LLC) module, an internet protocol (internet protocol, IP) processing module, a transmission control protocol/user datagram protocol (transmission control protocol/user datagram protocol, TCP/UDP) processing module, and an application (application) layer module. The IP module and the LLC module may communicate with each other through an upper-layer interface. There may be one or more antennas in the radio frequency module, and a quantity of antennas of the STA may be the same as or different from a quantity of antennas of the AP.

When a transmitter sends data to a receiver, the data starts from an application layer of the transmitter, passes through a TCP layer, an IP layer, an LLC layer, a MAC layer, and a PHY layer of the transmitter, then travels through a transmission link to a PHY layer of the receiver, passes through a MAC layer, an LLC layer, an IP layer, and a TCP layer of the receiver, and finally reaches an application layer of the receiver, and vice versa.

It should be noted that the AP and the STA may support the 802.11 standards. The 802.11 standards are mainly for a PHY layer and a MAC layer. Wi-Fi data frames on which this application primarily focuses are a PPDU and an AMPDU.

In the WLAN, data, control signaling, management signaling, or the like is transmitted between the AP and the STA by using an MPDU. An MPDU usually includes a frame header, a frame body (frame body), and a frame check sequence (frame check sequence, FCS). The frame body is used to carry data, management information, or control information transmitted from an upper layer. For some specific types of MPDUs, for example, an acknowledgment frame, the frame body may not exist. The FCS is used to check whether the MPDU is correctly transmitted. Optionally, the frame header (also referred to as a MAC header (MAC header)) may include at least one of a frame control (frame control) field, a duration or identifier (duration/ID) field, an address information field, a sequence control (sequence control) field, a quality of service control (quality of service control, QoS Control) field, or a high throughput control (high throughput control, HT Control) field. In an example, for explanation of each field, refer to the IEEE 802.11 protocol. It should be understood that another field may be added to the MAC header or new meanings may be assigned to some fields in the existing MAC header.

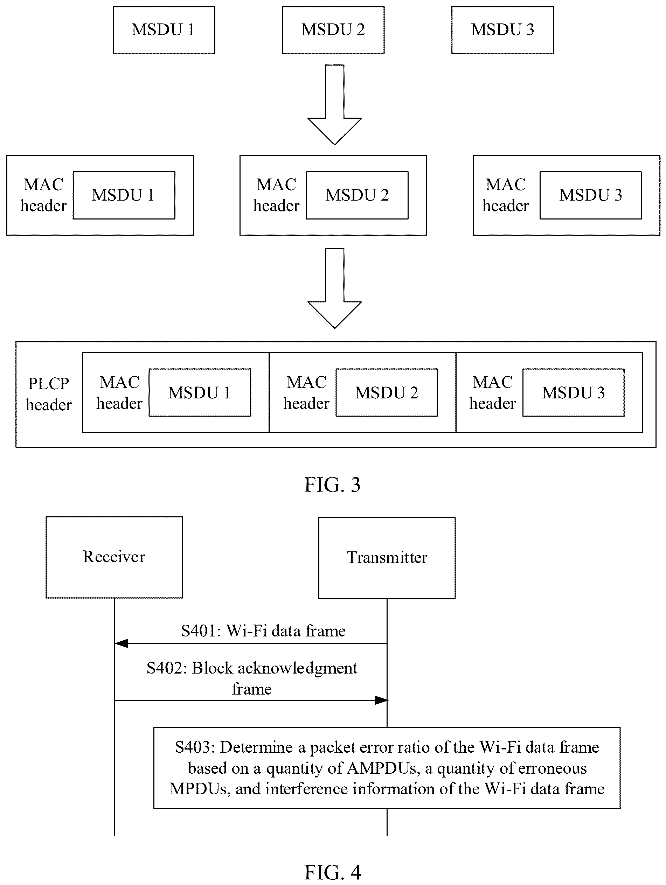

To improve performance of the WLAN, a frame aggregation technology is currently used at the MAC layer to aggregate a plurality of MPDUs into one AMPDU. For example, FIG. 3 is a diagram of a structure of an AMPDU. As shown in FIG. 3, a plurality of MAC service data units (MAC service data units, MSDUs) are aggregated to form an aggregated MAC service data unit (aggregated MAC service data unit, AMSDU). The AMSDU and a MAC header form an MPDU, which is then sent to a PHY layer. The AMPDU aggregates a plurality of MPDUs, and several MPDUs are sent by using a unified physical layer convergence protocol (physical layer convergence protocol, PLCP) preamble. This reduces PLCP preambles and PLCP headers, and effectively reduces overheads caused by channel contention and a physical layer preamble, improves transmission efficiency, and improves a system throughput.

A name of the MPDU entering a PLCP layer is changed to a physical service data unit (physical service data unit, PSDU). The PSDU is added with a PLCP preamble and a PLCP header to form a PPDU. In a transmission process, the transmitter sends a PLCP preamble to the receiver to notify the peer end. The PLCP header may include physical parameters related to data transmission, such as signal (SIGNAL), service (SERVICE), length (LENGTH) of data to be transmitted, and check code. The check code may be a frame check sequence (frame check sequence, FCS), a cyclic redundancy check (cyclic redundancy check, CRC), or the like. This is not limited herein. In the PPDU, data to be transmitted is encoded into N OFDM symbols. A value of N is not limited in this application, and N may be a positive integer.

When a Wi-Fi device performs communication, the transmitter usually selects a transmit parameter, for example, selects an MCS based on a PER. The PER mainly depends on a SINR of a signal received by the receiver. For example, with a same transmit parameter, a larger SINR indicates a lower PER. The SINR is affected by interference signal strength and noise intensity. Generally, for all MPDUs in a same AMPDU, received signal strength is the same, and is mainly affected by wireless channel fading. However, because interference signals are random, strength of interference signals received by each MPDU in the AMPDU may be different, and an MPDU decoding error caused by interference is also referred to as an MPDU "collision".

Currently, decoding errors caused by impact of the interference signal strength and impact of the noise intensity usually occur simultaneously, making it impossible for the transmitter to sense interference impact on the receiver. This results in conservative selection of a transmit parameter, such as a low MCS, leading to a low air interface transmission rate.

Based on this, this application proposes a communication method. When a receiver is interfered and transmission of some subframes fails due to a collision, interference information is fed back to a transmitter, so that the transmitter takes impact of an interference signal into consideration, thereby improving accuracy of collecting statistics on a packet error rate by the transmitter.

The following describes in detail the communication method according to an embodiment of this application. FIG. 4 is a diagram of interaction in a communication method according to an embodiment of this application. A communication apparatus in the communication method may include a transmitter and a receiver. The transmitter may be an AP, and the receiver may be a STA; or the transmitter may be a STA, and the receiver may be an AP; or the transmitter and the receiver are different APs or STAs. For a system architecture corresponding to the AP and the STA, refer to descriptions in FIG. 1. Details are not described herein again. A function performed by the AP in this application may be performed by an apparatus in the AP, and a function performed by the STA in this application may be performed by an apparatus in the STA. As shown in FIG. 4, the communication method includes the following steps.

S401: A transmitter sends a Wi-Fi data frame to a receiver.

Correspondingly, the receiver receives the Wi-Fi data frame from the transmitter.

The Wi-Fi data frame includes data to be transmitted. Wi-Fi frames may further include a Wi-Fi control frame and a Wi-Fi management frame. The Wi-Fi control frame is usually used in conjunction with a Wi-Fi data frame, and is responsible for area clearing, channel acquisition, carrier sensing, acknowledgment, and the like. The Wi-Fi management frame is mainly used to access and exit a wireless network and process association transfer between access points.

In this embodiment of this application, the Wi-Fi data frame may include a PPDU corresponding to a PHY layer or an AMPDU corresponding to a MAC layer.

S402: The receiver sends a block acknowledgment frame to the transmitter.

Correspondingly, the transmitter receives the block acknowledgment frame from the receiver.

The block acknowledgment frame includes interference information of the Wi-Fi data frame. The block acknowledgment frame, for example, a block acknowledgment frame, is referred to as a BA frame for short. A plurality of MPDUs are responded to by using one acknowledgment (acknowledgment, ACK) frame, so that a quantity of ACK frames can be reduced.

Optionally, when the Wi-Fi data frame is a PPDU, the interference information of the Wi-Fi data frame is a proportion of interfered OFDM symbols in the PPDU. When the Wi-Fi data frame is an AMPDU, the interference information of the Wi-Fi data frame is a quantity of interfered MPDUs in the AMPDU. A method for determining the interference information is not limited in this application. The following separately describes the two types of Wi-Fi data frames.

1. When the Wi-Fi data frame is a PPDU, and data to be transmitted in the PPDU is encoded into N OFDM symbols, an EVM of each of the N OFDM symbols is recorded through a PHY layer of the receiver, to obtain N EVMs; a difference between an absolute value of a first EVM and an absolute value of each of the N EVMs is determined through the PHY layer of the receiver; a first quantity of differences greater than a first threshold is determined through the PHY layer of the receiver; and a ratio of the first quantity to N is used as the proportion of the interfered OFDM symbols in the PPDU through the PHY layer of the receiver.

N is a positive integer. The first EVM is a maximum value of the absolute values of the N EVMs. Because the EVM is a negative number, a larger absolute value of the EVM indicates better performance. The first EVM may be understood as an optimal EVM, and may be denoted as *best_evm.* A quantity of first EVMs is not limited in this application. Optionally, if N is equal to 1, the quantity of first EVMs is 1. If N is greater than 1, the quantity of first EVMs may be greater than or equal to 1 and less than or equal to N.

The first threshold may be understood as an interference threshold, and may be denoted as *evm_diff_th.* A value of the first threshold is not limited in this application. The difference between the absolute value of the first EVM and the absolute value of each of the N EVMs is greater than the first threshold. When the EVM is denoted as *symbol_evm,* the first EVM is denoted as *best_evm,* and the first threshold is denoted as *evm_diff_th,* the foregoing relationship is represented as $|best\_evm| - |symbol\_evm| > evm\_diff\_th$. Because a difference between the absolute value of the first EVM and the absolute value of the first EVM is always equal to 0, when an EVM other than the first EVM in the N EVMs is denoted as a second EVM, if a difference between the absolute value of the first EVM and an absolute value of the second EVM is greater than the first threshold, it indicates that an OFDM symbol corresponding to the second EVM is an interfered OFDM symbol. In this way, the quantity of differences greater than the first threshold is denoted as the first quantity, and a quantity of interfered OFDM symbols in the N OFDM symbols transmitted at the PHY layer may be counted, so that the ratio of the first quantity to N may be used as the proportion of the interfered OFDM symbols in the PPDU.

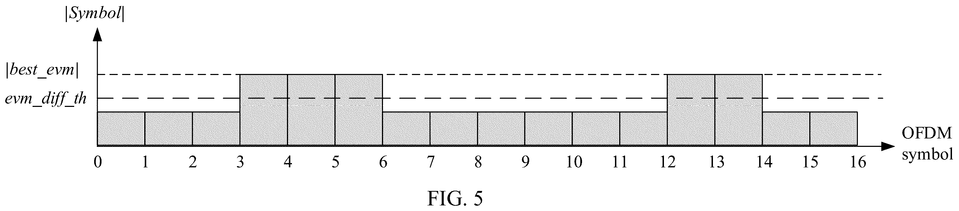

For example, FIG. 5 is a diagram of determining a proportion of interfered OFDM symbols in a PPDU according to an embodiment of this application. As shown in FIG. 5, a horizontal axis represents a quantity of OFDM symbols, each column represents one OFDM symbol, and there are 16 OFDM symbols in total, that is, N is 16. A vertical axis represents an absolute value of an EVM of an OFDM symbol, that is, $|symbol\_evm|$. The absolute value of the first EVM is represented by $|best\_evm|$, the first threshold is represented by *evm_diff_th,* and the first quantity is 5. If the proportion of the interfered OFDM symbols in the PPDU is denoted as *ppdu_interf_ratio, ppdu_interf_ratio* = $5/16 \times 100\% = 31\%$.

2. When the Wi-Fi data frame is an AMPDU and the AMPDU includes M MPDUs, each of the M MPDUs is checked through a MAC layer of the receiver, to obtain a first MPDU with a check error; a second quantity of first MPDUs corresponding to an interfered OFDM symbol is determined through the MAC layer of the receiver; and the second quantity is used as a quantity of interfered MPDUs in the AMPDU through the MAC layer of the receiver.

M is a positive integer. Optionally, M is less than or equal to 256. A method for checking an MPDU is not limited in this application, and may be an FCS, a CRC, or the like. The first MPDU is an MPDU with a check error, and may be understood as an MPDU with a decoding error caused by interference. After the first MPDU is determined at the MAC layer of the receiver, whether the first MPDU includes an interfered OFDM symbol may be checked through a PHY layer of the receiver. If the first MPDU includes the interfered OFDM symbol, the first MPDU is determined as the first MPDU corresponding to the interfered OFDM symbol.

It may be understood that there is a correspondence between an OFDM symbol at the PHY layer and an MPDU at the MAC layer. After the first MPDU that fails the check at the MAC is determined, the second quantity of first MPDUs that correspond to the interfered OFDM symbol and that are at the MAC layer may be determined based on a correspondence between an interfered OFDM symbol determined at the PHY and an MPDU at the MAC layer. That is, the quantity of interfered MPDUs in the AMPDU is determined.

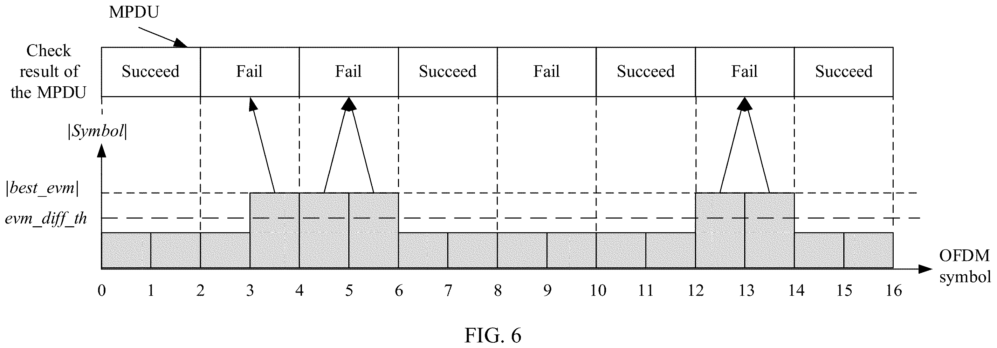

For example, FIG. 6 is a diagram of determining a quantity of interfered MPDUs in an AMPDU according to an embodiment of this application. As shown in FIG. 6, in the top three rows, a horizontal axis represents a quantity of OFDM symbols, each column represents one OFDM symbol, and there are 16 OFDM symbols in total, that is, N is 16. In the top three rows, a vertical axis represents an absolute value of an EVM of an OFDM symbol, that is, $|symbol\_evm|$. The absolute value of the first EVM is represented by $|best\_evm|$, the first threshold is represented by *evm_diff_th,* and the quantity of interfered OFDM symbols in the PPDU is 5. A bottom row represents check results of the MPDUs. It may be learned that there are four first MPDUs that fail the check, and it may be learned from a correspondence between these first MPDUs and OFDM symbols in the top three rows that there are three first MPDUs corresponding to interfered OFDM symbols. That is, the second quantity is 3. That is, when the quantity of interfered MPDUs in the AMPDU is denoted as *interf_mpdu_num, interf_mpdu_num* is 3.

After the interference information of the Wi-Fi data frame is determined, the interference information may be sent to the transmitter via the BA frame, or may be sent to the transmitter in another form (for example, through independent signaling or carried in other existing signaling). A form of the interference information in the BA frame is not limited in this application. Optionally, the interference information of the Wi-Fi data frame is located in a reserved (Reserved) field or a user-defined field of the block acknowledgment frame. In this way, the interference information of the Wi-Fi data frame may be transmitted by using the reserved field or the user-defined field.

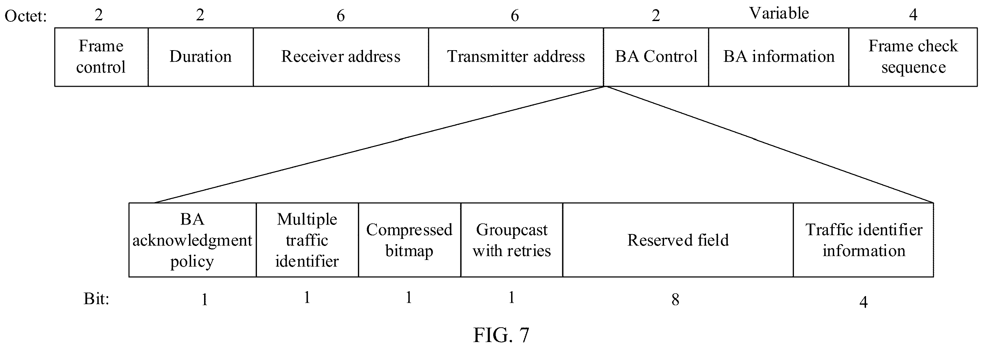

For example, FIG. 7 is a diagram of a structure of a BA frame. As shown in FIG. 7, a reserved field in a BA frame belongs a BA control field, the BA control field occupies two octets (octet), and the reserved field occupies eight bits (bit). The BA control field further includes a BA acknowledgment policy (BA Ack Policy) field, a multiple traffic identifier (Multiple Traffic Identifier, Multi TID) field, a compressed bitmap (Compressed Bitmap) field, and a groupcast with retries (Groupcast with Retries, GCR) field that separately occupy one bit, and a traffic identifier information (Traffic Identifier Information, TID_INFO) field that occupies four bits. In addition to the BA control field, the BA frame further includes a frame control (Frame Control) field and a duration (Duration) field that separately occupy two octets, a frame check sequence (FCS) field that occupies four octets, a transmitter address (Transmitter Address, TA) field and a receiver address (Receiver Address, RA) field that separately occupy six octets, and a BA information field whose field length is variable.

When the reserved field occupies eight bits, if the Wi-Fi data frame is a PPDU, a proportion, in the reserved field, of interfered OFDM symbols in the PPDU may be greater than or equal to 0 and less than or equal to 100%. If the Wi-Fi data frame is an AMPDU, a quantity, in the reserved field, of interfered MPDUs, in the AMPDU may be greater than or equal to 0 and less than or equal to 255.

S403: The transmitter determines a packet error rate of the Wi-Fi data frame based on a quantity of AMPDUs, a quantity of erroneous MPDUs, and the interference information of the Wi-Fi data frame.

The quantity of AMPUs may be denoted as *aggr_mpdu_num,* and the quantity of erroneous MPDUs may be denoted as *error_mpdu_num.* When the Wi-Fi data frame is a PPDU, data to be transmitted in the PPDU is encoded into N OFDM symbols, and a proportion of interfered OFDM symbols in the PPDU is denoted as *ppdu_interf_ratio,* 0, the packet error rate *PER* of the Wi-Fi data frame may be obtained through calculation according to Formula (1).

$$PER = max\left\{\frac{error\_mpdu\_num}{aggr\_mpdu\_num} \times 100\% - ppdu\_interf\_ratio, 0\right\} \qquad (1)$$

When the Wi-Fi data frame is an AMPDU, the AMPDU includes M MPDUs, and a quantity of interfered MPDUs in the AMPDU is denoted as *interf_mpdu_num,* the packet error rate *PER* of the Wi-Fi data frame may be obtained through calculation according to Formula (2).

$$PER = \frac{error\_mpdu\_num - interf\_mpdu\_num}{aggr\_mpdu\_num} \times 100\% \qquad (2)$$

In the communication method shown in FIG. 4, after receiving the Wi-Fi data frame from the transmitter, the receiver sends the BA frame to the transmitter. The BA frame includes the interference information of the Wi-Fi data frame. In other words, when the receiver is interfered and transmission of some subframes fails due to a collision, the interference information is fed back to the transmitter. Then, the transmitter may determine the packet error rate of the Wi-Fi data frame based on the interference information of the Wi-Fi data frame, the quantity of erroneous MPDUs, and the quantity of AMPDUs. In this way, the transmitter takes impact of an interference signal into consideration, thereby improving accuracy of collecting statistics on a packet error rate by the transmitter.

The methods in embodiments of this application are described in detail above, and apparatuses in embodiments of this application are provided below.

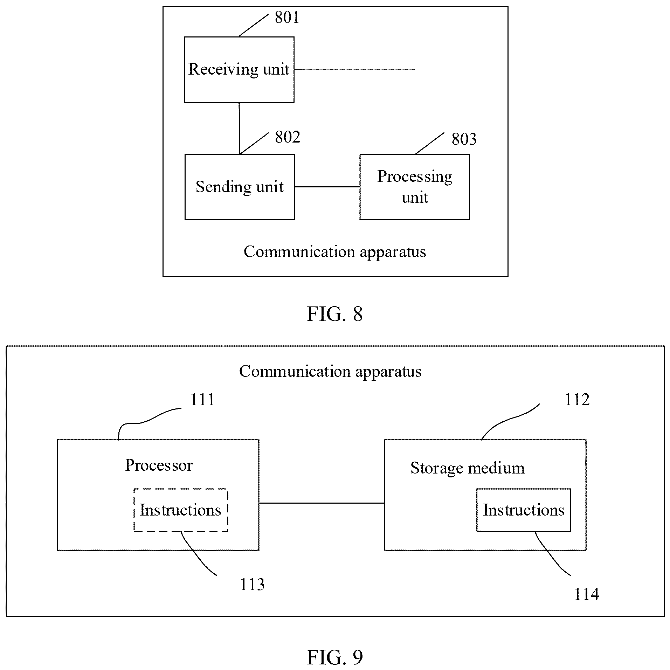

FIG. 8 is a diagram of a structure of a communication apparatus according to an embodiment of this application. The communication apparatus may include a receiving unit 801, a sending unit 802, and a processing unit 803. The receiving unit 801 may be an apparatus having a signal input (receiving) function, and the sending unit 802 may be an apparatus having a signal output (sending) function. The receiving unit 801 and the sending unit 802 are configured to perform signal transmission with another device or another component in the device. The processing unit 803 may be an apparatus having a processing function, and may include one or more processors, configured to execute instructions (or code or a program), for example, process a communication protocol and communication data.

The communication apparatus may be a receiver. In this embodiment of this application, a function performed by the receiver may be performed by an apparatus in the receiver. Alternatively, the communication apparatus may be a transmitter. In this embodiment of this application, a function performed by the transmitter may be performed by an apparatus in the transmitter. The following uses a transmitter or a receiver as an example for description.

When the communication apparatus is a receiver, the receiving unit 801 is configured to receive a Wi-Fi data frame from a transmitter.

The sending unit 802 is configured to send a block acknowledgment frame to the transmitter, where the block acknowledgment frame includes interference information of the Wi-Fi data frame.

In an example, the Wi-Fi data frame includes a PPDU, data to be transmitted in the PPDU is encoded into N OFDM symbols, the interference information of the Wi-Fi data frame is a proportion of interfered OFDM symbols in the PPDU, and N is a positive integer. The processing unit 803 is configured to: record an EVM of each of the N OFDM symbols through a PHY layer, to obtain N EVMs, where the N EVMs include a first EVM, and an absolute value of the first EVM is a maximum value of absolute values of the N EVMs; determine a difference between the absolute value of the first EVM and the absolute value of each of the N EVMs through the PHY layer; determine a first quantity of differences greater than a first threshold through the PHY layer; and use a ratio of the first quantity to N as the proportion of the interfered OFDM symbols in the PPDU through the PHY layer.

In an example, the Wi-Fi data frame includes an AMPDU, the AMPDU includes M MPDUs, the interference information of the Wi-Fi data frame is a quantity of interfered MPDUs in the AMPDU, and M is a positive integer. The processing unit 803 is configured to: check each of the M MPDUs through a MAC layer, to obtain a first MPDU with a check error; determine, through the MAC layer, a second quantity of first MPDUs corresponding to an interfered OFDM symbol, where a difference between an absolute value of an EVM of the interfered OFDM symbol and an absolute value of a first EVM is less than a first threshold, the first EVM is a maximum value of absolute values of N EVMs, and the N EVMs include an EVM of each of N OFDM symbols obtained from PPDU encoding; and use the second quantity as the quantity of interfered MPDUs in the AMPDU through the MAC layer.

In an example, M is less than or equal to 256.

In an example, the interference information of the Wi-Fi data frame is located in a reserved field or a user-defined field of the block acknowledgment frame.

When the communication apparatus is a transmitter, the sending unit 802 is configured to send a Wi-Fi data frame to a receiver.

The receiving unit 801 is configured to receive a block acknowledgment frame from the receiver, where the block acknowledgment frame includes interference information of the Wi-Fi data frame.

The processing unit 803 is configured to determine a packet error rate of the Wi-Fi data frame based on a quantity of AMPDUs, a quantity of erroneous MPDUs, and the interference information of the Wi-Fi data frame.

In an example, the Wi-Fi data frame includes a PPDU, data to be transmitted in the PPDU is encoded into N OFDM symbols, the interference information of the Wi-Fi data frame is a proportion of interfered OFDM symbols in the PPDU, N is a positive integer, and the packet error rate *PER* of the Wi-Fi data frame is obtained through calculation according to the following formula:

$$PER = max\left\{\frac{error\_mpdu\_num}{aggr\_mpdu\_num} \times 100\% - ppdu\_interf\_ratio, 0\right\}$$

where *error_mpdu_num* is the quantity of erroneous MPDUs, *aggr_mpdu_num* is the quantity of AMPDUs, and *ppdu_interf_ratio* is the proportion of the interfered OFDM symbols in the PPDU.

In an example, the Wi-Fi data frame includes an AMPDU, the AMPDU includes M MPDUs, the interference information of the Wi-Fi data frame is a quantity of interfered MPDUs in the AMPDU, M is a positive integer, and the packet error rate *PER* of the Wi-Fi data frame is obtained through calculation according to the following formula:

$$PER = \frac{error\_mpdu\_num - interf\_mpdu\_num}{aggr\_mpdu\_num} \times 100\%$$

where *error_mpdu_num* is the quantity of erroneous MPDUs, *aggr_mpdu_num* is the quantity of AMPDUs, and *interf_mpdu_num* is the quantity of interfered MPDUs in the AMPDU.

For implementation of the receiving unit 801, the sending unit 802, and the processing unit 803, refer to related descriptions in FIG. 4. Details are not described herein again.

FIG. 9 is a diagram of a structure of another communication apparatus according to an embodiment of this application. The communication apparatus may be a transmitter or a receiver, and is configured to implement the method described in the method embodiments. As shown in FIG. 9, the communication apparatus may include a processor 111 and a storage medium 112. The processor 111 may also be referred to as a processing unit, and may implement a specific control function. The storage medium 112 may also be referred to as a storage unit or a memory. The storage medium 112 stores instructions 114. The instructions 114 may be run on the processor 111, so that the communication apparatus performs the method described in FIG. 4 in embodiments of this application.

Optionally, the processor 111 may include instructions 113, and the instructions 113 may be run on the processor 111, so that the communication apparatus performs the method described in FIG. 4 in embodiments of this application.

The communication apparatus described in the foregoing embodiment may be a terminal, but a scope of the apparatus described in this application is not limited thereto. The communication apparatus may be an independent device or may be a part of a large device. For example, the communication apparatus may be:

(1) an independent integrated circuit IC, a chip, or a chip system or subsystem;
(2) a set including one or more ICs, where optionally, the IC set may include a storage component configured to store data and/or instructions;
(3) an ASIC, for example, a modem; or
(4) a module that can be embedded in another device.

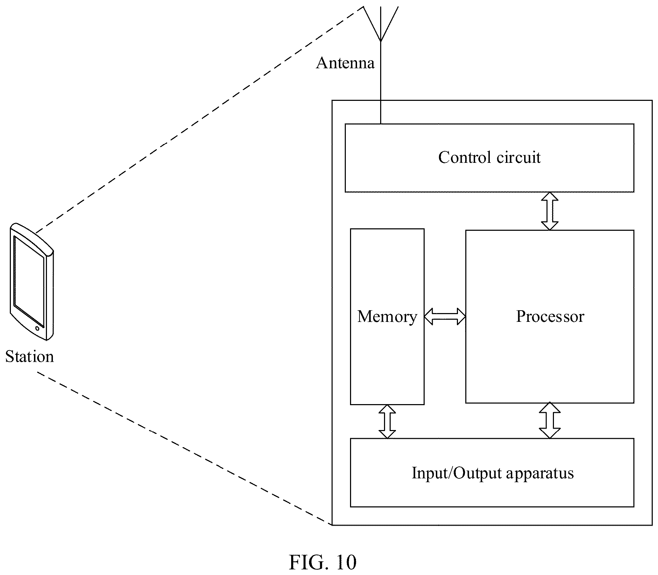

FIG. 10 is a diagram of a structure of a STA according to an embodiment of this application. For ease of description, FIG. 10 shows only main components of the STA. As shown in FIG. 10, the STA includes a processor, a memory, a control circuit, an antenna, and an input/output apparatus. The processor is mainly configured to: process a communication protocol and communication data, control the entire STA, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the STA is powered on, the processor may read a software program in a storage unit, interpret and execute instructions of the software program, and process data of the software program. When data needs to be sent in a wireless manner, the processor performs baseband processing on to-be-sent data, and then outputs a baseband signal to the radio frequency circuit. The radio frequency circuit processes the baseband signal to obtain a radio frequency signal, and sends the radio frequency signal to the outside in a form of an electromagnetic wave through the antenna. When data is sent to the STA, the radio frequency circuit receives a radio frequency signal through the antenna, further converts the radio frequency signal into a baseband signal, and outputs the baseband signal to the processor. The processor converts the baseband signal into data, and processes the data.

For ease of description, only one memory and one processor are shown in FIG. 10. In an actual STA, there may be a plurality of processors and a plurality of memories. The memory may also be referred to as a storage medium, a storage device, or the like. This is not limited in embodiments of this application.

In an embodiment, the antenna is configured to perform operations performed by the receiving unit 801 and the sending unit 802 in the foregoing embodiment. The processor is configured to perform operations performed by the processing unit 803 in the foregoing embodiment. The STA may be further configured to perform the method performed by the STA in FIG. 4. Details are not described herein again.

An embodiment of this application further provides a computer-readable storage medium, and the computer-readable storage medium stores a computer program. When the program is executed by a processor, a procedure related to the transmitter or the receiver in the communication method provided in the foregoing method embodiments may be implemented.

An embodiment of this application further provides a computer program product. The computer program product is configured to store a computer program. When the computer program runs on a computer (or a processor), the computer is enabled to perform one or more steps in any one of the foregoing communication methods. When each component module of the foregoing device is implemented in a form of a software functional unit and sold or used as an independent product, the component module may be stored in a computer-readable storage medium.

An embodiment of this application provides a chip, including a processor, configured to: invoke, from a memory, instructions stored in the memory and run the instructions, to enable a communication apparatus on which the chip is installed to perform any one of the foregoing methods.

An embodiment of this application further provides another chip, including an input interface, an output interface, and a processing circuit. The input interface, the output interface, and the circuit are connected through an internal connection path. The processing circuit is configured to perform any one of the foregoing methods. Optionally, the chip further includes a memory. The input interface, the output interface, a processor, and the memory are connected through an internal connection path. The processor is configured to execute code in the memory. When the code is executed, the processor is configured to perform any one of the foregoing methods.

An embodiment of this application further provides a chip system, including at least one processor and a communication interface. The communication interface and the at least one processor are interconnected through a line. The at least one processor is configured to run a computer program or instructions, to perform any one of the foregoing methods. The chip system may include a chip, or may include a chip and another discrete device.

An embodiment of this application further provides a communication system. The system includes a transmitter and a receiver. For specific descriptions, refer to the method shown in FIG. 4.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another appropriate type.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraints of the technical solutions. A person skilled in the art may use different methods to implement the described function for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

A sequence of the steps of the method in embodiments of this application may be adjusted, combined, or removed based on an actual requirement. Steps in each embodiment may be partially performed (for example, the terminal may not perform the steps performed by the terminal in the foregoing embodiments). An execution sequence of different steps may be changed. Embodiments described in this specification may be combined with other embodiments, different embodiments may be combined with each other, and different steps of different embodiments in this specification may be combined.

The modules/units in the apparatuses in embodiments of this application may be combined, divided, or removed based on an actual requirement.

"Embodiments" mentioned in this specification mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment.

"Protocols" in this application may be communication protocols or specifications, for example, a 3GPP communication protocol.

Terms "first", "second", "third", "fourth", and the like (if any) in embodiments of this application are used to distinguish between similar objects but do not necessarily indicate a specific order or sequence.

In embodiments of this application, "include" may indicate an inclusion relationship, or an equal relationship. For example, if A includes B, A may include other content in addition to B, or A and B are same content.

In the descriptions of this application, unless otherwise specified, "/" indicates an "or" relationship between associated objects. For example, A/B may indicate A or B. In this application, "and/or" merely describes an association relationship between associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

**Claims**

1. A communication method, comprising:

   receiving a wireless fidelity Wi-Fi data frame from a transmitter; and
   sending a block acknowledgment frame to the transmitter, wherein the block acknowledgment frame comprises interference information of the Wi-Fi data frame.

2. The method according to claim 1, wherein the Wi-Fi data frame comprises a physical protocol data unit PPDU, data to be transmitted in the PPDU is encoded into N orthogonal frequency division multiplexing OFDM symbols, the interference information of the Wi-Fi data frame is a proportion of interfered OFDM symbols in the PPDU, and N is a positive integer; and
   the method further comprises:

   recording an error vector magnitude EVM of each of the N OFDM symbols through a physical PHY layer, to obtain N EVMs, wherein the N EVMs comprise a first EVM, and an absolute value of the first EVM is a maximum value of absolute values of the N EVMs;
   determining a difference between the absolute value of the first EVM and the absolute value of each of the N EVMs through the PHY layer;
   determining a first quantity of the differences greater than a first threshold through the PHY layer; and
   using a ratio of the first quantity to N as the proportion of the interfered OFDM symbols in the PPDU through the PHY layer.

3. The method according to claim 1, wherein the Wi-Fi data frame comprises an aggregated medium access control protocol data unit AMPDU, the AMPDU comprises M MPDUs, the interference information of the Wi-Fi data frame is a quantity of interfered MPDUs in the AMPDU, and M is a positive integer; and
   the method further comprises:

   checking each of the M MPDUs through a medium access control MAC layer, to obtain a first MPDU with a check error;
   determining, through the MAC layer, a second quantity of first MPDUs corresponding to an interfered OFDM symbol, wherein a difference between an absolute value of an EVM of the interfered OFDM symbol and an absolute value of a first EVM is less than a first threshold, the first EVM is a maximum value of absolute values of N EVMs, and the N EVMs comprise an EVM of each of N OFDM symbols obtained from PPDU encoding; and
   using the second quantity as the quantity of interfered MPDUs in the AMPDU through the MAC layer.

4. The method according to claim 3, wherein M is less than or equal to 256.

5. The method according to any one of claims 1 to 4, wherein the interference information of the Wi-Fi data frame is located in a reserved field or a user-defined field of the block acknowledgment frame.

6. A communication method, comprising:

  sending a wireless fidelity Wi-Fi data frame to a receiver;
  receiving a block acknowledgment frame from the receiver, wherein the block acknowledgment frame comprises interference information of the Wi-Fi data frame; and
  determining a packet error rate of the Wi-Fi data frame based on a quantity of aggregated medium access control protocol data units AMPDUs, a quantity of erroneous MPDUs, and the interference information of the Wi-Fi data frame.

7. The method according to claim 6, wherein the Wi-Fi data frame comprises a physical protocol data unit PPDU, data to be transmitted in the PPDU is encoded into N orthogonal frequency division multiplexing OFDM symbols, the interference information of the Wi-Fi data frame is a proportion of interfered OFDM symbols in the PPDU, N is a positive integer, and the packet error rate *PER* of the Wi-Fi data frame is obtained through calculation according to the following formula:

$$PER = max \left\{ \frac{error\_mpdu\_num}{aggr\_mpdu\_num} \times 100\% - ppdu\_interf\_ratio, 0 \right\}$$

wherein *error_mpdu_num* is the quantity of erroneous MPDUs, *aggr_mpdu_num* is the quantity of AMPDUs, and *ppdu_interf_ratio* is the proportion of the interfered OFDM symbols in the PPDU.

8. The method according to claim 6, wherein the Wi-Fi data frame comprises an AMPDU, the AMPDU comprises M MPDUs, the interference information of the Wi-Fi data frame is a quantity of interfered MPDUs in the AMPDU, M is a positive integer, and the packet error rate *PER* of the Wi-Fi data frame is obtained through calculation according to the following formula:

$$PER = \frac{error\_mpdu\_num - interf\_mpdu\_num}{aggr\_mpdu\_num} \times 100\%$$

wherein *error_mpdu_num* is the quantity of erroneous MPDUs, *aggr_mpdu_num* is the quantity of AMPDUs, and *interf_mpdu_num* is the quantity of interfered MPDUs in the AMPDU.

9. A communication apparatus, comprising:

  a receiving unit, configured to receive a wireless fidelity Wi-Fi data frame from a transmitter; and
  a sending unit, configured to send a block acknowledgment frame to the transmitter, wherein the block acknowledgment frame comprises interference information of the Wi-Fi data frame.

10. The apparatus according to claim 9, wherein the Wi-Fi data frame comprises a physical protocol data unit PPDU, data to be transmitted in the PPDU is encoded into N orthogonal frequency division multiplexing OFDM symbols, the interference information of the Wi-Fi data frame is a proportion of interfered OFDM symbols in the PPDU, and N is a positive integer; and
the apparatus further comprises a processing unit, configured to: record an error vector magnitude EVM of each of the N OFDM symbols through a physical PHY layer, to obtain N EVMs, wherein the N EVMs comprise a first EVM, and an absolute value of the first EVM is a maximum value of absolute values of the N EVMs; determine a difference between the absolute value of the first EVM and the absolute value of each of the N EVMs through the PHY layer; determine a first quantity of the differences greater than a first threshold through the PHY layer; and use a ratio of the first quantity to N as the proportion of the interfered OFDM symbols in the PPDU through the PHY layer.

11. The apparatus according to claim 9, wherein the Wi-Fi data frame comprises an aggregated medium access control protocol data unit AMPDU, the AMPDU comprises M MPDUs, the interference information of the Wi-Fi data frame is a quantity of interfered MPDUs in the AMPDU, and M is a positive integer; and
the apparatus further comprises a processing unit, configured to: check each of the M MPDUs through a medium access control MAC layer, to obtain a first MPDU with a check error; determine, through the MAC layer, a second quantity of first MPDUs corresponding to an interfered OFDM symbol, wherein a difference between an absolute value of an EVM of the interfered OFDM symbol and an absolute value of a first EVM is less than a first threshold, the first EVM is a maximum value of absolute values of N EVMs, and the N EVMs comprise an EVM of each of N OFDM symbols obtained from PPDU encoding; and use the second quantity as the quantity of interfered MPDUs in the AMPDU through the MAC layer.

12. The apparatus according to claim 11, wherein M is less than or equal to 256.

13. The apparatus according to any one of claims 9 to 12, wherein the interference information of the Wi-Fi data frame is located in a reserved field or a user-defined field of the block acknowledgment frame.

14. A communication apparatus, comprising:

a sending unit, configured to send a wireless fidelity Wi-Fi data frame to a receiver;
a receiving unit, configured to receive a block acknowledgment frame from the receiver, wherein the block acknowledgment frame comprises interference information of the Wi-Fi data frame; and
a processing unit, configured to determine a packet error rate of the Wi-Fi data frame based on a quantity of aggregated medium access control protocol data units AMPDUs, a quantity of erroneous MPDUs, and the interference information of the Wi-Fi data frame.

15. The apparatus according to claim 14, wherein the Wi-Fi data frame comprises a physical protocol data unit PPDU, data to be transmitted in the PPDU is encoded into N orthogonal frequency division multiplexing OFDM symbols, the interference information of the Wi-Fi data frame is a proportion of interfered OFDM symbols in the PPDU, N is a positive integer, and the packet error rate *PER* of the Wi-Fi data frame is obtained through calculation according to the following formula:

$$PER = max\left\{\frac{error\_mpdu\_num}{aggr\_mpdu\_num} \times 100\% - ppdu\_interf\_ratio, 0\right\}$$

wherein *error_mpdu_num* is the quantity of erroneous MPDUs, *aggr_mpdu_num* is the quantity of AMPDUs, and *ppdu_interf_ratio* is the proportion of the interfered OFDM symbols in the PPDU.

16. The apparatus according to claim 14, wherein the Wi-Fi data frame comprises an AMPDU, the AMPDU comprises M MPDUs, the interference information of the Wi-Fi data frame is a quantity of interfered MPDUs in the AMPDU, M is a positive integer, and the packet error rate *PER* of the Wi-Fi data frame is obtained through calculation according to the following formula:

$$PER = \frac{error\_mpdu\_num - interf\_mpdu\_num}{aggr\_mpdu\_num} \times 100\%$$

wherein *error_mpdu_num* is the quantity of erroneous MPDUs, *aggr_mpdu_num* is the quantity of AMPDUs, and *interf_mpdu_num* is the quantity of interfered MPDUs in the AMPDU.

17. A communication apparatus, comprising a processor and a storage medium, wherein the storage medium stores instructions, and when the instructions are run by the processor, the method according to any one of claims 1 to 5 or the method according to any one of claims 6 to 8 is implemented.

18. A computer-readable storage medium, wherein the computer-readable storage medium comprises instructions, and when the instructions are run by a processor, the method according to any one of claims 1 to 5 or the method according to any one of claims 6 to 8 is implemented.

19. A communication method, wherein the method comprises the method according to any one of claims 1 to 5, or the method comprises the method according to any one of claims 6 to 8.

20. A communication system, wherein the communication system comprises a transmitter and a receiver, the transmitter is configured to perform the method according to any one of claims 1 to 5, and the receiver is configured to perform the method according to any one of claims 6 to 8.

Access
point

Station

Station

FIG. 1

| Application layer module |

| Transmission control protocol/user datagram protocol processing module |

| Internet protocol processing module |

Upper-layer
interface

| Logical link control module |

| Medium access control layer module |

| Physical layer baseband module |

| Radio frequency module |

Access point

| Application layer module |

| Transmission control protocol/user datagram protocol processing module |

| Internet protocol processing module |

Upper-layer
interface

| Logical link control module |

| Medium access control layer module |

| Physical layer baseband module |

| Radio frequency module |

Station

FIG. 2

MSDU 1 MSDU 2 MSDU 3

| MAC header | MSDU 1 |

| MAC header | MSDU 2 |

| MAC header | MSDU 3 |

| PLCP header | MAC header | MSDU 1 | MAC header | MSDU 2 | MAC header | MSDU 3 |

FIG. 3

Receiver Transmitter

S401: Wi-Fi data frame

S402: Block acknowledgment frame

S403: Determine a packet error ratio of the Wi-Fi data frame based on a quantity of AMPDUs, a quantity of erroneous MPDUs, and interference information of the Wi-Fi data frame

FIG. 4

FIG. 5

FIG. 6

EP 4 723 525 A1

EP 4 723 525 A1

| Octet: | 2 | 2 | 6 | 6 | 2 | Variable | 4 |
|--------|---|---|---|---|---|----------|---|
| | Frame control | Duration | Receiver address | Transmitter address | BA Control | BA information | Frame check sequence |

| | BA acknowledgment policy | Multiple traffic identifier | Compressed bitmap | Groupcast with retries | Reserved field | Traffic identifier information |
|--------|---|---|---|---|---|---|
| Bit: | 1 | 1 | 1 | 1 | 8 | 4 |

FIG. 7

FIG. 8

FIG. 9

FIG. 10

## INTERNATIONAL SEARCH REPORT

| | International application No. |
|---|---|
| | **PCT/CN2024/098958** |

| A. | CLASSIFICATION OF SUBJECT MATTER |
|---|---|

H04L 1/1607(2023.01)i;  H04W84/12(2009.01)i

According to International Patent Classification (IPC) or to both national classification and IPC

| B. | FIELDS SEARCHED |
|---|---|

Minimum documentation searched (classification system followed by classification symbols)

IPC:H04L1/-; H04W84/-

Documentation searched other than minimum documentation to the extent that such documents are included in the fields searched

Electronic data base consulted during the international search (name of data base and, where practicable, search terms used)

CNABS, CNTXT, CNKI, 万方, WANFANG, VEN, EPTXT, WOTXT, USTXT, 3GPP, IEEE: 误包率, 丢包率, 失包率, 分组错误率, 包错误率, 块确认, BA帧, 组确认, 块ACK, 组ACK, 干扰, OFDM, 符号, ??PDU, 数目, 数量, 个数, PER, packet? w error w rate?, block w ack+, BA w frame?, B-ACK, interfer+, symbol?, number?

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110999148 A (QUALCOMM INC.) 10 April 2020 (2020-04-10)<br>claim 4, and description, paragraphs 40-62, 92-94 and 146-148 | 1, 5, 9, 13, 17-20 |
| A | CN 107547175 A (ZHUHAI MEIZU TECHNOLOGY CO., LTD.) 05 January 2018 (2018-01-05)<br>entire document | 1-20 |
| A | CN 114586300 A (HUAWEI TECHNOLOGIES CO., LTD.) 03 June 2022 (2022-06-03)<br>entire document | 1-20 |
| A | US 2011194423 A1 (LG ELECTRONICS INC.) 11 August 2011 (2011-08-11)<br>entire document | 1-20 |
| A | INTEL CORP. "R1-1906785 Channel access mechanism for NR-unlicensed"<br>*3GPP tsg_ran\wg1_rl1*, 04 May 2019 (2019-05-04),<br>entire document | 1-20 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 August 2024** | **16 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/098958** |

### C. DOCUMENTS CONSIDERED TO BE RELEVANT

| Category* | Citation of document, with indication, where appropriate, of the relevant passages | Relevant to claim No. |
| --- | --- | --- |
| A | SUONG, H. N. et al. "Rate Equilibria in WLANs with Block ACKs" <br> *38th Annual IEEE Conference on Local Computer Networks,* 10 March 2014 (2014-03-10), entire document | 1-20 |

**INTERNATIONAL SEARCH REPORT**
Information on patent family members

International application No.

**PCT/CN2024/098958**

| Patent document cited in search report | | | Publication date (day/month/year) | Patent family member(s) | | | Publication date (day/month/year) |
|---|---|---|---|---|---|---|---|
| CN | 110999148 | A | 10 April 2020 | CN | 110999148 | B | 15 July 2022 |
| | | | | WO | 2019040465 | A1 | 28 February 2019 |
| | | | | US | 2019068253 | A1 | 28 February 2019 |
| | | | | US | 10554265 | B2 | 04 February 2020 |
| CN | 107547175 | A | 05 January 2018 | CN | 107547175 | B | 19 June 2020 |
| CN | 114586300 | A | 03 June 2022 | CN | 114586300 | B | 11 June 2024 |
| US | 2011194423 | A1 | 11 August 2011 | US | 8565210 | B2 | 22 October 2013 |
| | | | | WO | 2010024536 | A2 | 04 March 2010 |
| | | | | WO | 2010024536 | A3 | 14 May 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310852463X